# EUROPEAN PATENT SPECIFICATION

(11) **EP 2 238 223 B1**
(45) Date of publication and mention of the grant of the patent: **26.08.2015**
(21) Application number: 09705941.4
(22) Date of filing: 26.01.2009
(51) Int. Cl.: C10J 3/48

(54) **PROCESS TO START-UP A COAL GASIFICATION REACTOR**
VERFAHREN ZUM STARTEN EINES KOHLENVERGASUNGSREAKTORS
PROCÉDÉ POUR LE DÉMARRAGE D'UN RÉACTEUR DE GAZÉIFICATION DU CHARBON

(30) Priority: 28.01.2008 EP 08100986
(43) Date of publication of application: 13.10.2010
(73) Proprietor: Shell Internationale Research Maatschappij B.V., 2596 HR The Hague (NL)
(72) Inventor: YUAN, Bihua, NL-1031 CM Amsterdam (NL); ZALMAN, Lucien, NL-1031 CM Amsterdam (NL)
(74) Representative: Matthezing, Robert Maarten
(86) International application number: PCT/EP2009/050814
(87) International publication number: WO 2009/095365

(56) References cited:
- DD-A3- 278 692
- DE-A1- 2 703 921
- GB-A- 1 501 284
- GB-A- 2 159 267
- US-A- 4 353 712
- US-A- 4 372 754
- US-A- 4 781 576
- US-A- 6 033 447
- US-A1- 2008 000 404

## Description

### Field of the invention

The invention relates to a process to start-up a pressurized gasification process of a carbonaceous fuel, especially the solid or liquid ash containing carbonaceous fuel, as performed in a vertically elongated gasification reactor.

### Background of the invention

Gasification of a carbonaceous fuel involves partial combustion of a finely divided carbonaceous fuel carried by a gas or liquid carrier in a gasification reactor by using an oxygen-containing gas. The partial combustion of the carbonaceous fuel and the oxygen-containing gas is performed in the gasification reactor by means of a flame, and forms a gaseous mixture comprising mainly H₂ and CO. The reaction of the carbonaceous fuel with the oxygen-containing gas requires elevated temperatures and pressures to be realized in the gasification reactor. For combusting heavy, difficult ignitable fuels, such as pulverized coal, a relatively small start-up flame is generated according to for example GB-A-2159267 using a fuel that is less likely to blow out.

US-A-4372754 describes a start-up process for a pressurized gasification process wherein an ignition burner is ignited, a flame is detected, a start-up burner is started before coal is fed to the main gasification burners. The publication is especially directed to the design of the ignition burner, which burner is positioned at the lower end of the reactor.

US-A-2008/0000404 describes a process to start-up an entrained flow gasification reactor having a plurality of burners firing downwards. In the gasification process a pulverized fuel is provided to a pulverized fuel channel as present in a burner. In the start-up sequence the gasification reactor is first brought to a selected operating pressure of up to 100 bar. Hereafter a fuel gas is fed to the pulverized fuel channel of the burner. Fuel gas is supplied until the sensed heat quantity of the ignition burner and the combustible fuel gas-oxygen flames is high enough to ensure that pulverized coal will ignite. Once this point has been reached fuel gas supply to a single burner is terminated and the supply of pulverized coal to said burner is started.

GB-A-2159267 describes a process to start up a pressurized gasification of a pulverized coal and a start-up burner for use in said process. In this process the start-up burner is used to ignite the main, i.e. pulverized coal, fuel flow and to pressurize the combustion chamber of the gasification reactor. The start-up burner of GB-A-2159267 has a built-in ignition device in the form of an ancillary burner and provided with a flame detector in form of the optical fibre. The start-up burner is lit by generating a flame by spark causing the ignition of a gaseous combustible mixture. The flame is used for ignition of a fuel and an oxygen-containing gas.

JP-A-2002161283 describes a start-up method for a coal gasifier. The gasifier comprises two coal burners set in a furnace and a tap burner disposed in a lower part of the furnace under a slag tap. The tap burner is used for heating the slag tap to prevent the slag tap being plugged by slag during start-up.

Although GB A-2159267 describes the main steps of starting up it is not at all straightforward how to start up a gasification reactor with more than one gasification burner.

It is an object of the present invention to provide a process to start up a gasification of a solid fuel in a gasification reactor comprising at least one pair of diametrically positioned and horizontally firing gasification burners.

### Summary of the Invention

The above object is achieved by the present invention by the following process. Process to start up a pressurized gasification process, using a solid or liquid, ash containing carbonaceous fuel as feed, as performed in a vertically elongated entrained-flow gasification reactor having one or more pairs of diametrically positioned and horizontally firing gasification burners wherein the following steps are performed in the following order,
(a) inserting an ignition burner into the gasification reactor and igniting an ignition burner and detecting a flame,
(b) inserting a start-up burner into the gasification reactor and providing a flow of a hydrocarbon fuel and an oxygen containing gas to the start-up burner, which ignites due to the flame of the ignition burner, and increasing the temperature in the gasification reactor to a temperature of between 700 and 1000 °C and increasing the pressure in the gasification reactor to a pressure of between 5 and 20 bar,
(c) providing the carbonaceous fuel and an oxygen-containing gas to a first gasification burner and subsequently another part of the carbonaceous fuel and another part of the oxygen-containing gas are provided to a diametrically positioned second gasification burner,
(d) terminating the flow of hydrocarbon fuel and the flow of oxygen-containing gas to the start-up burner,
(e) optionally repeating step (c) for any other pairs of diametrically positioned and horizontally firing gasification burners,
(f) further increasing the pressure in the gasification reactor to a operating pressure of between 20 and 100 bar.

Applicants found that by performing the process according to the invention, a flawless start-up of the gasification process is possible. A further advantage is that increasing the pressure to only between 5 and 20 bar in step (b) and maintaining said pressure throughout steps (c)-(e) is advantageous because it will result in a lower upstream pressure requirements for the hydrocarbon fuel feed system.

### Brief description of the drawings

Figure 1 shows a radial cross section of a gasification reactor employed according to the present invention.
Figure 2 shows a portion of a longitudinal cross section along the axis A-A of a gasification reactor employed according to the present invention.

### Detailed description of the invention

In the gasification process, a carbonaceous fuel is subjected to partial oxidation with a molecular oxygen comprising gas. The partial oxidation is preferably performed at an operating temperature of between 1000 and 1800 °C and more preferably at a temperature between 1200 and 1800 °C. The operating pressure at which partial oxidation is performed is preferably between 0.3 and 12 MPa and preferably between 2 and 10 MPa. Gasification reactor is a so-called entrained-flow gasification reactor as described in the "Gasification" by C. Higman and M. van der Burgt, 2003, Elsevier Science, Chapter 5.3, pages 109-128. To the entrained flow gasification reactor, according to the present invention, the carbonaceous fuel and the oxygen- containing gas are supplied co-currently via pair(s) of diametrically opposing positioned burners. The internal wall of the gasification reactor is preferably cooled by means of water or evaporating water flowing through conduits present in said wall. More preferably said wall is composed of interconnected conduits. Such wall is referred to as a membrane wall. The operating conditions are such that the process is operated in a slagging mode, which means that the operation temperature is above the ash melting point. The synthesis gas, obtained by such gasification process, as it exits the gasification reactor under operating conditions is preferably cooled to a temperature of below 1000 °C, preferably to a temperature below 600 °C suitably either by direct quenching with evaporating water, by indirect heat exchange against evaporating water or by combination of such cooling steps. Slag and other molten solids are suitably discharged from the gasification reactor at the lower end of the said reactor.

In step (a) the gasification reactor is preferably in a hot stand-by condition. By the term "hot stand-by" is here meant that the temperature within the reactor is about 200 °C. This is suitably achieved by routing steam at certain pressure through the conduits of the optional membrane wall of the gasification reactor. Prior to step (a) the gasification reactor is preferably flushed and filled with an inert gas, for example nitrogen.

The gasification reactor is provided with one or more pairs of horizontal firing gasification burners in diametrically opposing positions, which pairs are at the same or different elevations. The burner is preferably a co-annular burner with a passage for an oxygen-containing gas and a passage for the fuel and an optional fluid or gaseous carrier medium. Examples of suitable gasification burners are described in US-A-451874 and in US-A-4523529. Preferably the gasification reactor will have substantially horizontal firing burners in diametrically opposing positions. More preferably the gasification reactor has four or six of such burners at one elevation. To increase the capacity it may be advantageous to have more than one elevation each provided with pair(s) of burners. Suitably two of such elevations may be present.

The ash-containing fuel may be preferably coal, as for example anthracite, brown coal, bituminous coal, subbituminous coal, and lignite. Examples of alternative carbonaceous feedstocks are petroleum coke, biomass, peat and heavy residues as extracted from tar sands or the asphalt fraction as separated from said residues in a deasphalting process.

Suitable biomass derived feedstocks containing ash are solid biomass feeedstocks as obtained by torrefaction of a biomass source. Torrefaction is preferably combined with a compression or pelletation step in order to make the biomass feed more suitable for a gasification process wherein the biomass is supplied in a so-called dry form. Torrefaction of a biomass source material is well known and for example described in M. Pach, R. Zanzi and E. Bjornbom, Torrefied Biomass a substitute for Wood and Charcoal, 6th Asia-Pacific International Symposium on Combustion and Energy Utilization, May 2002, Kuala Lumpur, and in Bergman, P.C.A., "Torrefaction in combination with pelletisation - the TOP process", ECN Report, ECN-C-05-073, Petten, 2005.

A suitable liquid biomass feedstock for use in the present process is obtained by drying and flash pyrolysis of a biomass source. In flash pyrolysis processes a solid char and liquid biomass feed component are typically obtained. Flash pyrolysis is well known and for example described in EP-A-904335; in Dinesh Mohan, Charles U. Pittman, JR., and Phillip H. Steele, Pyrolysis of Wood/Biomass for Bio-oil: A Critical Review, Energy and Fuels 2006, 20, 848-889; and in E. Henrich: clean syngas from biomass by pressurised entrained flow gasification of slurries from fast pyrolysis. In: Synbios, the syngas route to automotive biofuels, conference held from 18 to 20 May 2005, Stockholm, Sweden (2005).

Suitable biomass sources are weeds or residues of the agricultural industry. Examples of suitable residue products are streams generated in the palm oil industry, corn industry, bio-diesel industry, forestry industry, wood processing industry and paper industry.

A solid carbonaceous fuel may be provided to the burner of the entrained flow gasifier reactor as a slurry in water. Coal slurry feeding processes are for example described in EP-A-168128. Preferably the solid carbonaceous feed is provided to the burner in a gas-solids mixture comprising the solid fuel in the form of a powder and a suitable carrier gas. Suitable carrier gasses are N₂, CO₂ or synthesis gas, i.e. a mixture comprising CO and H₂. The carrier gas is preferably N₂ or CO₂. The use of CO₂ as carrier gas is for example described in WO-A-2007042562.

The oxygen-containing gas comprises substantially pure O₂ or air. Preferably it contains at least 90% by volume oxygen, with nitrogen, carbon dioxide and argon being permissible as impurities. Substantially pure oxygen is preferred, such as prepared by an air separation unit (ASU). Steam may be present in the oxygen-containing gas as supplied to the burner(s) to act as moderator gas. The ratio between oxygen and steam is preferably from 0 to 0.3 parts by volume of steam per part by volume of oxygen. Oxygen-containing gas is suitably supplied to said gasification burner(s) via a common header.

Step (a) of the process according to the invention comprises the steps of inserting an ignition burner into the gasification reactor and igniting an ignition burner and detecting a flame. Suitably the ignition burner is started by means of spark ignition and a flame is detected by means of a detector. It is provided with supply means for an oxygen-containing gas, suitably air, and a fuel. The fuel is suitably a gaseous fuel such as natural gas, refinery off-gas or LPG. The firing direction of the ignition burner suitably overlaps the position of the flame of the first gasification burner that will be ignited in step (c). Preferably the angle α between the firing direction of the said gasification burner with the firing direction of the ignition burner is between 10 and 45°, more preferably between 10 and 20°. Preferably the ignition burner is positioned in the gasification reactor wall at the same elevation as said gasification burner.

Step (b) of the process according to the invention comprises steps of inserting a start up burner into the gasification reactor and providing a hydrocarbon fuel and an oxygen containing gas to a start-up burner, which ignites due to the flame of the ignition burner. The start-up burner is preferably capable of maintaining a stable flame during the temperature and pressure buildup. For this reason it is preferred to use a so-called twin-fluid atomizer type burner as a start-up burner. In a twin-fluid atomizer burner, the fuel stream is mixed within the burner with a stream of oxygen-containing gas flowing at a high velocity in order to achieve breaking up of a continuous liquid fuel phase into discrete droplets (atomization). Preferably a so-called internal mixing configuration is used. Such a twin-fluid atomizer burner is described in Perry's Chemical Engineers' Handbook, 7th edition, Edited by Perry, R.H.; Green, D.W. (1997) McGraw-Hill, Section 27-34. Preferably the velocity of the combustible mixture as it exits the orifice(s) of the twin-fluid atomizer is at a sonic velocity in order to maintain a stable flame in the pressure range of step (b). Preferably the start-up burner is positioned at a higher or lower elevation than the gasification burner. Preferably the start-up burner fires towards the horizontal plane comprising the gasification burners under an angle β. More preferably this angle β is between 10 and 45°, even more preferably between 10 and 20°. Preferably the firing direction of the start up burner is such that its flame overlaps the flame of the ignition burner. The start up burner may be positioned above or below the ignition burner in a vertical plane formed by both burners. Preferably the start up burner is positioned above the ignition burner in a vertical plane formed by both burners to support the draining of the liquid fuel out of the start-up burner. The start-up burner may have for example about 10 to 25% of the normal heating capacity of one gasification burner. A suitable hydrocarbon fuel for the start-up burner is a middle distillate, such as for example kerosine or gas oil. Preferably the start-up burner is provided with means for detecting the flame after ignition. After the flame of the start-up burner is detected, the ignition burner is preferably extinguished, sluiced out and isolated from the gasification reactor, as for example described in US-A-4781576.

After the start up burner has started its operation the temperature and pressure in the gasification reactor will increase. The temperature increases to a temperature between 700 and 1000 °C. The pressure increases to a pressure between 5 and 20 bar. Preferably the effluent gas generated in step (b) is directed to a flare via a pressure control valve. The pressure control valve is suitably programmed to increase the pressure in the gasification reactor in step (b) by decreasing the throughput opening in time. Preferably the pressure control valve is programmed to increase the pressure in the gasification reactor at a rate of between 0.1 and 1 bar/minute.

The means to detect the flame of the ignition burner and of the start-up burner is preferably done with flame eyes. Optical eyes can also be used for this purpose as described in GB-A-2159267. Other means such as for example ionisation detection are also possible. The ignition burner is preferably provided with a flame detector. If ignition burner and the start-up burner are present at separate positions, then each require a separate passage through the pressure wall of the gasification reactor and separate passage through the optional reactor membrane wall. The ignition burner and the start-up burner may be combined in one burner as shown for example in GB-A-2159267. This is advantageous because for such a device only one passage through the pressure wall of the gasification reactor and through the optional reactor membrane wall is required. Preferably the ignition burner is positioned at the same elevation as the gasification burners in the gasification reactor. After the start-up burner is ignited by the ignition burner, and a flame is detected in the start-up burner, the ignition burner is stopped manually or automatically. In case a separate ignition burner is used, it is preferred to sluice out the ignition burner after a flame has been detected for the start-up burner.

In step (c) of the process according to the invention the carbonaceous fuel and an oxygen-containing gas are provided to a first gasification burner and subsequently, preferably after a short period, another part of the carbonaceous feed and an oxygen containing gas are provided to a diametrically positioned second gasification burner. A term "short period" is indicating a time period preferably between 1 and 5 minutes.

In step (d) of the process according to the invention the flow of hydrocarbon fuel and an oxygen containing gas to the start-up burner are terminated. The said termination is performed after start-up of the first pair of the diametrically positioned gasification burners. Preferably the said termination is performed automatically. After said termination, the ignition burner and the start-up burner are preferably sluiced out and isolated from the gasification reactor as for example described in US-A-4781576. Sluicing out the ignition burner and start-up burner is advantageous because this will result in less exposure to the harsh environment in the gasification reactor during normal operation.

Step (e) of the process according to the invention consists of repeating step (c) for any remaining pairs of diametrically positioned and horizontally firing gasification burners which have not been put into operation. Preferably step (e) is performed only after the oxygen pressure in the common header has stabilized after performing step (c) on the previous pair of burners. A stabilized condition has a normal meaning as used in the process industry. Typically a stabilized operation will have been arrived at after 2-3 minutes.

In step (f) of the process according to the invention the pressure in the gasification reactor is further increased to an operating pressure of between 20 and 100 bar. Step (f) is thus performed after all of the gasification burners have been put in operation according to steps (c) and optionally (e). The pressure is increased via the same pressure control valve as described above that regulates the flow of the effluent gas of the start-up process to flare. The pressure control valve is programmed to increase the pressure in the gasification reactor at a rate of between 0.1 and 1 bar/minute in step (f). After the pressure in the gasification reactor is increased to a desired operating pressure in step (f), the effluent gas of the start-up process is directed to a downstream process. Examples of downstream processes are ammonia, methanol, hydrogen and Fisher-Tropsch processes and power generation processes, e.g. IGCC.

### Detailed description of the drawings

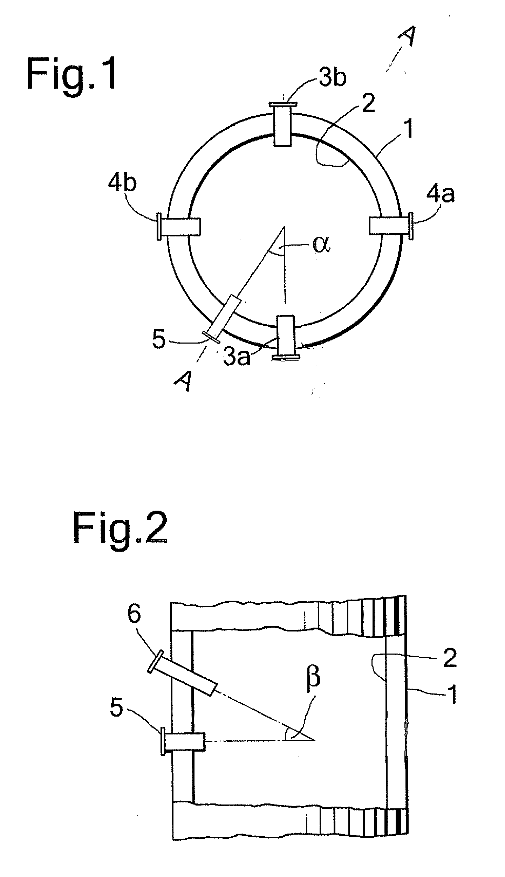

Figure 1 shows a radial cross section of a gasification reactor (1) lined on the inner side with the water-cooled inner wall (2) and provided with pairs of diametrically positioned and horizontally firing gasification burners (3a, 3b, 4a, 4b). In Figure 1 only two such pairs of burners at same elevation are shown as an example. Close to one of the gasification burners, an ignition burner (5) is shown at angle α with respect to the centre of the said gasification reactor.

Figure 2 shows a portion of a longitudinal cross-section along the axis A-A of the gasification reactor with a pair of diametrically positioned and horizontally firing gasification burners (3a, 3b) positioned in the reactor wall. The start-up burner (6) is positioned close to the said gasification burner at angle β with respect to the centre of the said gasification reactor.

## Claims

1. Process to start up a pressurized gasification process, using a solid or liquid, ash containing carbonaceous fuel as feed, as performed in a vertically elongated entrained-flow gasification reactor having one or more pairs of diametrically opposing positioned and horizontally firing gasification burners wherein the following steps are performed in the following order,
(a) inserting an ignition burner into the gasification reactor and igniting an ignition burner and detecting a flame,
(b) inserting a start-up burner into the gasification reactor and providing a flow of a hydrocarbon fuel and an oxygen containing gas to the start-up burner, which ignites due to the flame of the ignition burner, and increasing the temperature in the gasification reactor to a temperature of between 700 and 1000 °C and increasing the pressure in the gasification reactor to a pressure of between 5 and 20 bar,
(c) providing the carbonaceous fuel and an oxygen-containing gas to a first gasification burner and subsequently another part of the carbonaceous fuel and another part of the oxygen-containing gas are provided to a diametrically positioned second gasification burner,
(d) terminating the flow of hydrocarbon fuel and the flow of oxygen-containing gas to the start-up burner,
(e) optionally repeating step (c) for any other pairs of diametrically positioned and horizontally firing gasification burners,
(f) further increasing the pressure in the gasification reactor to a operating pressure of between 20 and 100 bar.

2. Process according to claim 1, wherein the ignition burner is started by means for spark ignition and a flame is detected by means of a detector.

3. Process according to any of the claims 1-2, wherein the start-up burner is of a twin-fluid atomizer type and wherein the velocity of the combustible mixture as it exits the orifice(s) of the burner is at a sonic velocity.

4. Process according to any of the claims 1-3, wherein oxygen-containing gas is supplied to said burners via a common header and wherein step (c) is repeated in step (e) after the oxygen pressure in the common header has stabilized.

5. Process according to any of the claims 1-4, wherein after performing step (d) the start-up burner is sluiced out of the gasification reactor.

6. Process according to any of the claims 1-5, wherein an effluent gas of a start-up process is directed to a flare via a pressure control valve.

7. Process according to claim 6, wherein the pressure control valve is programmed to increase the pressure in the gasification reactor at a rate of between 0.1 and 1 bar/minute in steps (b) and (f).

8. Process according to any of the claims 1-7, wherein after the pressure in the gasification reactor is increased to an operating pressure in step (f), the effluent gas of the start-up process is directed to the downstream process.

9. Process according to any one of claims 1-8, wherein the angle α between the firing direction of the gasification burner with the firing direction of the ignition burner is between 10 and 45°, more preferably between 10 and 20°.

10. Process according to any one of claims 1-9, wherein the start-up burner fires towards the horizontal plane comprising the gasification burners under an angle β which angle is between 10 and 45°, even more preferably between 10 and 20°.

## Patentansprüche

1. Verfahren zum Starten eines Druckvergasungsverfahrens unter Verwendung eines festen oder flüssigen, aschehaltigen kohlenstoffhaltigen Brennstoffs als Zuführung, das in einem vertikal verlängerten Flugstromvergasungsreaktor mit einem oder mehreren Paaren diametral entgegengesetzt angeordneter und horizontal feuernder Vergasungsbrenner ausgeführt wird, wobei die folgenden Schritte in der folgenden Reihenfolge ausgeführt werden:
(a) Einführen eines Zündbrenners in den Vergasungsreaktor und Entzünden eines Zündbrenners und Erkennen einer Flamme,
(b) Einführen eines Startbrenners in den Vergasungsreaktor und Bereitstellen eines Stroms eines Kohlenwasserstoffbrennstoffs und eines sauerstoffhaltigen Gases in den Startbrenner, der aufgrund der Flamme des Zündbrenners zündet, und Erhöhen der Temperatur in dem Vergasungsreaktor auf eine Temperatur zwischen 700 und 1000 °C und Erhöhen des Drucks in dem Vergasungsreaktor auf einen Druck zwischen 5 und 20 Bar,
(c) Bereitstellen des kohlenstoffhaltigen Brennstoffs und eines sauerstoffhaltigen Gases einem ersten Vergasungsbrenner, wobei anschließend ein anderer Teil des kohlenstoffhaltigen Brennstoffs und ein anderer Teil des sauerstoffhaltigen Gases einem diametral entgegengesetzten zweiten Vergasungsbrenner bereitgestellt werden,
(d) Beenden des Stroms von Kohlenwasserstoffbrennstoff und des Stroms von sauerstoffhaltigem Gas zu dem Startbrenner,
(e) wahlweise Wiederholen von Schritt (c) für andere Paare von diametral entgegengesetzten und horizontal feuernden Vergasungsbrennern,
(f) weiteres Erhöhen des Drucks in dem Vergasungsreaktor auf einen Betriebsdruck von zwischen 20 und 100 Bar.

2. Verfahren nach Anspruch 1, wobei der Zündbrenner mittels Funkenentzündung gestartet wird und eine Flamme mittels eines Detektors erkannt wird.

3. Verfahren nach einem der Ansprüche 1 bis 2, wobei der Startbrenner von einem Zweistoff-Zerstäubertyp ist und wobei die Geschwindigkeit der brennbaren Mischung bei ihrem Austritt aus der oder den Öffnung(en) des Brenners bei einer Schallgeschwindigkeit liegt.

4. Verfahren nach einem der Ansprüche 1 bis 3, wobei sauerstoffhaltiges Gas mittels eines gemeinsamen Verteilers zu den Brennern geführt wird und wobei Schritt (c) in Schritt (e) wiederholt wird, nachdem sich der Sauerstoffdruck in dem gemeinsamen Verteiler stabilisiert hat.

5. Verfahren nach einem der Ansprüche 1 bis 4, wobei nach Ausführen von Schritt (d) der Startbrenner aus dem Vergasungsreaktor ausgeschleust wird.

6. Verfahren nach einem der Ansprüche 1 bis 5, wobei ein ausströmendes Gas eines Startverfahrens über ein Druckregelungsventil zu einer Fackel geleitet wird.

7. Verfahren nach Anspruch 6, wobei das Druckregelungsventil zum Erhöhen des Drucks in dem Vergasungsreaktor bei einer Rate von zwischen 0,1 und 1 Bar/Minute in Schritt (b) und (f) programmiert ist.

8. Verfahren nach einem der Ansprüche 1 bis 7, wobei, nachdem der Druck in dem Vergasungsreaktor in Schritt (f) auf einen Betriebsdruck erhöht ist, das ausströmende Gas des Startverfahrens zu dem nachgeschalteten Verfahren geleitet wird.

9. Verfahren nach einem der Ansprüche 1 bis 8, wobei der Winkel α zwischen der Feuerrichtung des Vergasungsbrenners mit der Feuerrichtung des Zündbrenners zwischen 10 und 45°, mehr bevorzugt zwischen 10 und 20° liegt.

10. Verfahren nach einem der Ansprüche 1 bis 9, wobei der Startbrenner auf die horizontale Ebene, die die Vergasungsbrenner umfasst, in einem Winkel β feuert, wobei dieser Winkel zwischen 10 und 45°, sogar noch mehr bevorzugt zwischen 10 und 20° liegt.

## Revendications

1. Procédé pour démarrer un procédé de gazéification sous pression, utilisant un combustible carboné solide ou liquide contenant des cendres en tant que charge, tel qu'effectué dans un réacteur de gazéification verticalement allongé à flux entraîné ayant une ou plusieurs paires de brûleurs de gazéification situés de façon diamétralement opposée et à combustion horizontale dans lequel les étapes suivantes sont effectuées dans l'ordre suivant,
(a) l'insertion d'un brûleur d'allumage dans le réacteur de gazéification et l'allumage d'un brûleur d'allumage et la détection d'une flamme,
(b) l'insertion d'un brûleur de démarrage dans le réacteur de gazéification et l'apport d'un flux d'un combustible hydrocarboné et d'un gaz contenant de l'oxygène au brûleur de démarrage, qui s'enflamme en raison de la flamme du brûleur d'allumage, et l'augmentation de la température dans le réacteur de gazéification à une température comprise entre 700 et 1000 °C et l'augmentation de la pression dans le réacteur de gazéification à une pression comprise entre 5 et 20 bar,
(c) l'apport du combustible carboné et d'un gaz contenant de l'oxygène à un premier brûleur de gazéification et par la suite une autre partie du combustible carboné et une autre partie du gaz contenant de l'oxygène sont apportées à un second brûleur de gazéification situé de façon diamétralement opposée,
(d) l'arrêt du flux de combustible hydrocarboné et du flux de gaz contenant de l'oxygène vers le brûleur de démarrage,
(e) facultativement la répétition de l'étape (c) pour de quelconques autres paires de brûleurs de gazéification situés de façon diamétralement opposée et à combustion horizontale,
(f) l'augmentation supplémentaire de la pression dans le réacteur de gazéification à une pression de fonctionnement comprise entre 20 et 100 bar.

2. Procédé selon la revendication 1, dans lequel le brûleur d'allumage est démarré au moyen d'un allumage par étincelle et une flamme est détectée au moyen d'un détecteur.

3. Procédé selon l'une quelconque des revendications 1-2, dans lequel le brûleur de démarrage est d'un type atomiseur bi-fluide et dans lequel la vitesse du mélange combustible alors qu'il sort du ou des orifices du brûleur est à une vitesse sonique.

4. Procédé selon l'une quelconque des revendications 1-3, dans lequel le gaz contenant de l'oxygène est apporté auxdits brûleurs par l'intermédiaire d'une nourrice commune et dans lequel l'étape (c) est répétée dans l'étape (e) après que la pression d'oxygène dans la nourrice commune s'est stabilisée.

5. Procédé selon l'une quelconque des revendications 1-4, dans lequel après la mise en oeuvre de l'étape (d) le brûleur de démarrage est déchargé du réacteur de gazéification.

6. Procédé selon l'une quelconque des revendications 1-5, dans lequel un gaz effluent d'un procédé de démarrage est dirigé vers une torche par l'intermédiaire d'une soupape de régulation de pression.

7. Procédé selon la revendication 6, dans lequel la soupape de régulation de pression est programmée pour augmenter la pression dans le réacteur de gazéification à une vitesse comprise entre 0,1 et 1 bar/minute dans les étapes (b) et (f).

8. Procédé selon l'une quelconque des revendications 1-7, dans lequel après que la pression dans le réacteur de gazéification est augmentée à une pression de fonctionnement dans l'étape (f), le gaz effluent du procédé de démarrage est dirigé vers le procédé aval.

9. Procédé selon l'une quelconque des revendications 1-8, dans lequel l'angle α entre la direction de combustion du brûleur de gazéification et la direction de combustion du brûleur d'allumage est compris entre 10 et 45°, de préférence encore entre 10 et 20°.

10. Procédé selon l'une quelconque des revendications 1-9, dans lequel le brûleur de démarrage brûle en direction du plan horizontal comprenant les brûleurs de gazéification sous un angle β lequel angle est compris entre 10 et 45°, de préférence même encore entre 10 et 20°.
